# EUROPEAN PATENT SPECIFICATION

(11) **EP 2 024 175 B1**
(45) Date of publication and mention of the grant of the patent: **01.02.2012**
(21) Application number: 07765906.8
(22) Date of filing: 08.06.2007
(51) Int. Cl.: B32B 15/14, B32B 7/14, E04B 1/80, B32B 15/20, B32B 17/02, B32B 5/28, B32B 5/18, B32B 27/04, B32B 27/28, B32B 27/42

(54) **INSULATION BOARD**
ISOLIERPLATTE
PANNEAU ISOLANT

(30) Priority: 08.06.2006 FI 20060569
(43) Date of publication of application: 18.02.2009
(73) Proprietor: Walki Group Oy, 37601 Valkeakoski (FI)
(72) Inventor: PEURAMÄKI, Juhani, FI-37640 Valkeakoski (FI)
(74) Representative: Hakola, Unto Tapani
(86) International application number: PCT/FI2007/050336
(87) International publication number: WO 2007/141393

(56) References cited:
- EP-A2- 0 122 905
- FI-A- 900 028
- JP-A- 06 079 819
- JP-A- 58 003 859
- US-A- 5 444 098
- US-A1- 2006 035 547
- DATABASE WPI Week 198538, Derwent Publications Ltd., London, GB; AN 1985-234486 & JP 60 154053 A (KOHKOKU CHEM IND CO LTD) 13 August 1985
- DATABASE WPI Week 198838, Derwent Publications Ltd., London, GB; AN 1988-267608 & JP 63 194938 A (NITTO BOSEKI CO LTD) 12 August 1988

## Description

The present invention relates to a thermal insulation board comprising insulation material and a coating.

In the countries of the European Community, a uniform, harmonized fire testing method for thermal insulations has been built up for more than 15 years. The content of the most demanding class A-1 in the EU fire classification is briefly that the calorimetric potential (PCS) of the insulation material must not exceed the value 2 MJ/kg. According to the norm, a coated insulation product in which the actual insulating material layer is in the fire class A-1, obtains the fire class A-1 without a separate test, if the fire load of the coating does not exceed the value 2 MJ/kg (the coating is considered a non-essential component whose thickness is less than 1 mm). Thus, only the calorimetric potential of the coating must be tested.

Mineral wood alone meets the classification A-1, but not with any coating. However, a coating is necessary and/or useful in view of the best possible performance of the insulation.

When manufacturing thermal insulation boards, the consumption of adhesives used to attach a foil to a coating may be high. Application FI 900028 discloses a method, where the consumption of adhesives may be lowered by first applying the adhesive to a fibre-containing layer, and then attaching a foil, e.g. an aluminium foil, to the layer. The foil, however, may be airtight, and the production of the insulation material may produce water. In such a case, the removal of water may slow down the manufacturing process.

With the method presented in this application, it is possible to manufacture a film product whose calorimetric potential is less than or equal to 2 MJ/kg.

In Europe, a British fire testing method is also used (BS476 Part 6 - 7 Fire Propagation Test), according to which testing the insulation material must achieve Class 0. With the method presented in this application, it is also possible to manufacture a thermal insulation board whose insulation material is phenolic foam insulation and which meets the requirements of Class 0.

The thermal insulation board according to the invention is characterized in that the insulation material is phenolic foam insulation and the coating is a perforated film product comprising an aluminium foil and a fibre-containing layer, which have been attached to each other by adhesive selected from the group consisting of hot-mett adhesives and water soluble adhesives so that the adhesive is applied to only those points where the aluminium foil and the fibres of the fibre-containing layer are attached to each other.

The fibre-containing layer referred to in this application may be a glass fibre mesh, a non-woven fabric containing glass fibres (glass fibre felt), or a polyester mesh.

Phenolic foam insulation is fire-resistant, but after it has caught fire, it will, however, burn. Therefore, the particular advantage of phenolic foam insulation lies in the fact that by using it, a delay can be provided in the initial situation of a fire. What is more, phenolic foam insulation does not produce such toxic combustion gases as polyurethane insulation does.

The fire load of the thermal insulation board can be made low, when adhesive is applied to only those points where the aluminium film and the fibre-containing film are attached to each other; for example, a non-adhesive area is left between the openings of the glass fibre mesh. Furthermore, the amount of adhesive used for the attaching is small. Consequently, by limiting the content of organic substance in the product, the best fire class is achieved without using fire retardant chemicals. Yet another advantage is that the bare aluminium foil between the openings of the glass fibre mesh has a very high surface energy, wherein e.g. adhesives adhere to it well.

The film product used as a coating for the thermal insulation board comprises an aluminium foil and a fibre-containing layer, normally a glass fibre mesh, which are fastened to each other by adhesive. The square mass of the aluminium foil is normally 45 to 55 g/m².

The glass fibre mesh is normally a mesh composed of glass fibre threads, with threads in longitudinal and cross directions. The square mass of the glass fibre mesh is normally 10 to 15 g/m², and its mesh size is preferably 5 to 10 mm × 10 mm. The square mass of the glass fibre mesh may also be greater than that mentioned above, and its mesh size may be, for example, 3 mm × 3 mm when the level of Class 0 is aimed at. The fibre material of the glass fibre mesh is normally E glass whose fineness may be 30 to 40 tex (tex = g/km).

The glass fibre mesh is held together by means of adhesive. The adhesive used at the stage of manufacture of the glass fibre mesh may be polyvinyl alcohol or suitable waterproof adhesive.

Instead of the glass fibre mesh, it is possible to use a sufficiently open non-woven fabric containing glass fibres (glass fibre felt), in which case the quantity of organic substance must also be kept on a sufficiently low level. Furthermore, in some applications, it is possible to use a polyester mesh instead of a glass fibre mesh.

According to the first embodiment of the invention, the film product is made so that a hot-melt adhesive in molten state is applied onto the glass fibre mesh, and the glass fibre mesh is fastened to the aluminium foil. The hot-melt adhesive may contain ethyl vinyl alcohol, resin and wax. The content of the hot-melt adhesive is normally 1 to 2 g/m² so that the total content of the adhesive used at the manufacturing stage of the glass fibre mesh and the hot-melt adhesive does not exceed 3 g/m², when the aim is to achieve EU A-1 class, but when Class 0 is aimed at, the content of the adhesive may be higher.

According to a second embodiment of the invention, the film product is made so that the adhesive applied at the manufacturing stage of the glass fibre felt is also used for attaching the glass fibre mesh to the aluminium foil. In other words, the manufacture of the glass fibre mesh and the fastening of the aluminium foil are integrated in a single process, wherein the adhesive in adhesive state can also be used for fastening the aluminium foil. The adhesive used may comprise polyvinyl alcohol, and its content, calculated on dry substance, is not more than 3 g/m², when EU A-1 class is aimed at, but when Class 0 level is aimed at, the content of the adhesive may be higher.

According to a third embodiment of the invention, the film product is made so that the glass fibre mesh is made ready and the adhesive contained in it is dried. The adhesive may comprise polyvinyl alcohol, and its content, calculated on dry substance, is not more than 3 g/m², when EU A-1 class is aimed at, but when Class 0 level is aimed at, the content of the adhesive may be higher.

When the glass fibre mesh and the aluminium foil are integrated, the adhesive in the glass fibre mesh is moistened, for example by spraying water onto the glass fibre mesh. The adhesive is thus made tacky again, and the glass fibre mesh is fastened onto the aluminium foil and dried. In addition to the glass fibre mesh, said methods can also be applied to a non-woven fabric or a polyester mesh that contains glass fibres.

The film product according to the invention can be used as a coating applied onto mineral wool, as a coating applied onto phenolic foam insulation, or as a material for a tape intended for the fastening of thermal insulations or for the sealing of structures. In the tape use, the film product has a particular advantage in addition to the fire properties: Previously, tapes have been made by extruding a plastic layer onto an aluminium foil and a glass fibre mesh. When an adhesive has been applied onto the plastic layer, its solvent substances have migrated between the aluminium foil and the plastic layer, detaching them from each other. Now, when the adhesive can be applied directly onto the aluminium foil (because the aluminium surface is exposed at the openings of the glass fibre mesh), no layers remain on the tape which might detach later on. The adhesive used in the tape is normally an adhesive that will be cross-linked further in course of time. The thickness of the adhesive layer may be 60 to 80 µm.

In the following, we shall discuss a situation in which the film product is used as a coating for a phenolic foam insulation. The phenolic foam insulation is formed by a condensation reaction in which water is produced. Consequently, the water must be removed from the insulation by keeping it at a mild temperature of, for example, 80 to 90°C for about one day. When the phenolic foam insulation has a coating, the removal of water must be taken into account in the structure of the coating. The coating is perforated, although the moisture may also move in and out of the product along the fibres of the fibre-containing layer, such as the glass fibre mesh.

When the film product is fastened to the phenolic foam insulation, the moisture in the phenolic foam insulation may activate the adhesive in the fibre-containing layer, such as the glass fibre mesh, if the adhesive is water soluble. Thus, the adhesive helps to fasten the coating to the insulation. If, on the other hand, the adhesive contains a hot-melt adhesive, the adhesive is fastened to the phenolic foam insulation when the insulation is dried at a raised temperature and the water has substantially exited the insulation. Because the film product is fastened onto the surface of the phenolic foam insulation during its formation, the phenolic foam insulation also penetrates around the threads of the mesh or non-woven fabric, so that the coating is also attached by this mechanism, in which case the surface resistance of the product is also improved. Furthermore, since the film product is also perforated, the phenolic foam insulation will penetrate into these perforations at the stage when they are formed, and again, fastening points are formed between the coating and the phenolic foam insulation.

The diameter of the perforations in the film product may be 0.1 to 1.2 mm, preferably 0.4 to 0.6 mm. The number of perforations is normally 2 to 4 per cm².

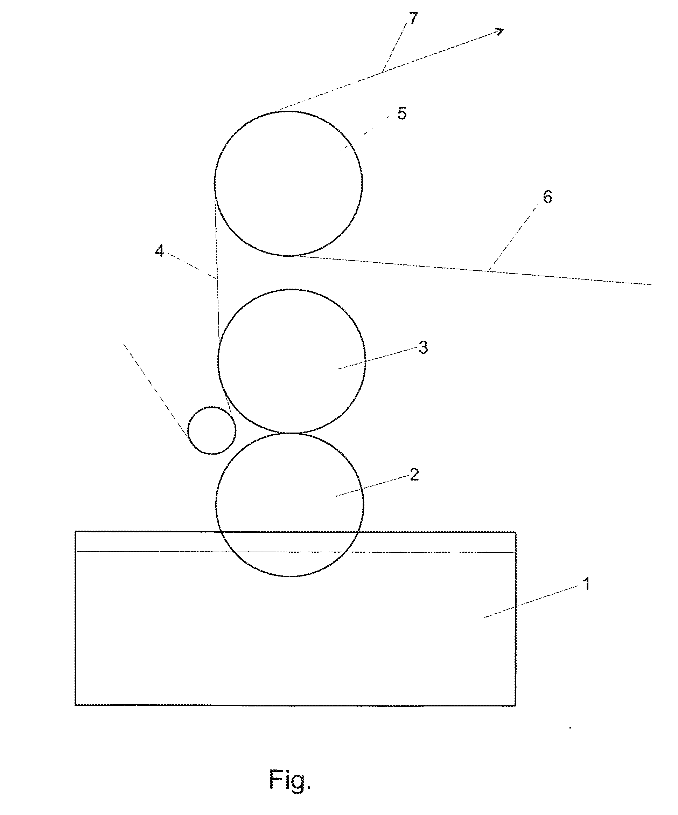

In the following, we shall discuss the film product used as a coating for the insulation by means of an example and a drawing. The drawing shows the process of manufacturing a film product according to the first embodiment.

### Example.

The raw materials for the film product were the following:
Aluminium foil
   - thickness 18 µm
   - square mass 49 g/m²
Hot-melt adhesive
   - applied content 1.5 g/m²
Glass fibre mesh
   - thread 34 tex glass fibre thread (E glass) containing more than 200 filaments
   - mesh size 5 mm × 10 mm
   - square mass 11 g/m²
   - 1 to 1.5 g/m² of organic adhesive in the glass fibre mesh

According to a measurement by VTT Technical Research Centre of Finland (RTE 59/04), the calorimetric potential of the film product is 1.3 MJ/kg.

When Class 0 level is aimed at, the film product being a coating for phenolic foam insulation, the glass fibre mesh may have a denser mesh size, for example 3 mm x 3 mm. The content of the hot-melt adhesive may also be higher, for example 6 to 10 g/m².

The drawing shows the manufacturing of a film product according to the first embodiment. A tank contains hot-melt adhesive 1 at a temperature of about 160°C. A roll 2 takes hot-melt adhesive 2 onto its surface. The roll 2 rotates at a speed that is about 10% of the web speed.

From the roll 2, the hot-melt adhesive is transferred onto a roll 3 which is preferably a rubber roll. Between the rolls 2 and 3, there is an adjustable nip where excess hot-melt adhesive is pressed out. The roll 3 rotates at a speed that is about 90 % of the web speed. From the surface of the roll 3, the hot-melt adhesive 1 is transferred onto a glass fibre mesh 4 whose web speed is about 150 m/min. The contact angle between the roll 3 and the glass fibre mesh is normally 10 to 15°.

An aluminium foil 6 is introduced onto the roll 5. The temperature of the roll 5 is about 80°C, so that the aluminium foil 6 is heated and the glass fibre mesh 4 adheres easily onto the aluminium foil 6. Thus, the film product 7 is formed.

## Claims

1. A thermal insulation board comprising insulation material and a coating, wherein the insulation material is phenolic foam insulation and the coating is a perforated film product comprising an aluminium foil and a fibre-containing layer, which have been attached to each other by adhesive, **characterized in that** the adhesive is selected from the group consisting of hot-melt adhesives and water soluble adhesives, and the adhesive is applied to only those points where the aluminium foil and the fibres of the fibre-containing layer are attached to each other.

2. The thermal insulation board according to claim 1, **characterized in that** the fiber-containing layer is a glass fibre mesh.

3. The thermal insulation board according to claim 1, **characterized in that** the fiber-containing layer is a non-woven fabric that contains glass fibres.

4. The thermal insulation board according to claim 1, **characterized in that** the fiber-containing layer is a polyester mesh.

5. The thermal insulation board according to any of the preceding claims, **characterized in that** the adhesive comprises hot-melt adhesive.

6. The thermal insulation board according to any of the preceding claims, **characterized in that** the adhesive comprises polyvinyl alcohol.

7. The thermal insulation board according to claim 2, **characterized in that** the content of adhesive is, calculated in dry substance, less than 3 g/m².

8. The thermal insulation board according to any of the preceding claims, **characterized in that** the diameter of the perforations in the film product is from 0.1 to 1.2 mm.

9. The thermal insulation board according to any of the preceding claims, **characterized in that** the number of perforations in the film product is from 2 to 4 per cm²

## Patentansprüche

1. Wärmeisolierplatte, aufweisend ein Isoliermaterial und eine Beschichtung, wobei das Isoliermaterial eine Phenolharzschaumisolierung und die Beschichtung ein perforiertes Filmprodukt ist, das eine Aluminiumfolie und eine faserhaltige Schicht aufweist, die durch Klebstoffe miteinander verbunden wurden, **dadurch gekennzeichnet, dass** der Klebstoff aus der Gruppe bestehend aus Heißschmelzklebstoffen und wasserlöslichen Klebstoffen ausgewählt ist, und wobei der Klebstoff nur auf die Stellen aufgetragen wird, an denen die Aluminiumfolie und die Fasern der faserhaltigen Schicht aneinander befestigt sind.

2. Wärmeisolierplatte nach Anspruch 1, **dadurch gekennzeichnet, dass** die faserhaltige Schicht ein Glasfasergewebe ist.

3. Wärmeisolierplatte nach Anspruch 1, **dadurch gekennzeichnet, dass** die faserhaltige Schicht ein Vliesstoff ist, der Glasfasern enthält.

4. Wärmeisolierplatte nach Anspruch 1, **dadurch gekennzeichnet, dass** die faserhaltige Schicht ein Polyestergewebe ist.

5. Wärmeisolierplatte nach einem der vorstehenden Ansprüche, **dadurch gekennzeichnet, dass** der Klebstoff einen Heißschmelzklebstoff aufweist.

6. Wärmeisolierplatte nach einem der vorstehenden Ansprüche, **dadurch gekennzeichnet, dass** der Klebstoff Polyvinylalkohol aufweist.

7. Wärmeisolierplatte nach Anspruch 2, **dadurch gekennzeichnet, dass** der Gehalt an Klebstoff, berechnet in der Trockensubstanz, weniger als 3 g/m² beträgt.

8. Wärmeisolierplatte nach einem der vorstehenden Ansprüche, **dadurch gekennzeichnet, dass** der Durchmesser der Perforierungen in dem Filmprodukt von 0,1 bis 1,2 mm beträgt.

9. Wärmeisolierplatte nach einem der vorstehenden Ansprüche, **dadurch gekennzeichnet, dass** die Anzahl der Perforierungen in dem Filmprodukt von 2 bis 4 pro cm² beträgt.

## Revendications

1. Panneau d'isolation thermique comprenant un matériau d'isolation et un revêtement, dans lequel le matériau d'isolation est une mousse phénolique d'isolation et le revêtement est un film perforé comprenant une feuille d'aluminium et une couche contenant des fibres qui ont été reliées l'une à l'autre par un adhésif, **caractérisé en ce que** l'adhésif est choisi dans le groupe comprenant des adhésifs thermofusibles et des adhésifs hydrosolubles et l'adhésif est appliqué uniquement sur les points où la feuille d'aluminium et les fibres de la couche contenant des fibres sont reliées les unes aux autres.

2. Panneau d'isolation thermique selon la revendication 1, **caractérisé en ce que** la couche contenant des fibres est un treillis en fibres de verre.

3. Panneau d'isolation thermique selon la revendication 1, **caractérisé en ce que** la couche contenant des fibres est une étoffe non tissée qui contient des fibres de verre.

4. Panneau d'isolation thermique selon la revendication 1, **caractérisé en ce que** la couche contenant des fibres est un treillis en polyester.

5. Panneau d'isolation thermique selon l'une quelconque des revendications précédentes, **caractérisé en ce que** l'adhésif comprend un adhésif thermofusible.

6. Panneau d'isolation thermique selon l'une quelconque des revendications précédentes, **caractérisé en ce que** l'adhésif comprend un alcool de polyvinyle.

7. Panneau d'isolation thermique selon la revendication 2, **caractérisé en ce que** la teneur en adhésif, calculée en substance sèche, est inférieure à 3 g/m².

8. Panneau d'isolation thermique selon l'une quelconque des revendications précédentes, **caractérisé en ce que** le diamètre des perforations du film est compris entre 0,1 et 1,2 mm.

9. Panneau d'isolation thermique selon l'une quelconque des revendications précédentes, **caractérisé en ce que** le nombre de perforations dans le film est compris entre 2 et 4 par cm².
